# EUROPÄISCHE PATENTANMELDUNG

(11) **EP 4 015 209 A1**
(43) Veröffentlichungstag der Anmeldung: **22.06.2022**
(21) Anmeldenummer: 21212567.8
(22) Anmeldetag: 06.12.2021
(51) Int. Cl.: B32B 1/08, B32B 5/02, B32B 25/18, B32B 25/12, B32B 25/10, B32B 27/12, B32B 27/30, B32B 27/32, B32B 27/28

(54) **SCHLAUCHLEITUNG, INSBESONDERE FÜR TRINKWASSERANWENDUNGEN**

(30) Priorität: 17.12.2020 DE 202020107325 U
(71) Anmelder: REHAU Industries SE & Co. KG, 95111 Rehau (DE)
(72) Erfinder: Burger, Anne, 95615 Marktredwitz (DE); Gareis, Annalena, 95355 Presseck (DE); Wazlawik, Klaus, 95030 Hof (DE); Zahn, Cornelia, 96047 Bamberg (DE)

(57) **Zusammenfassung**

Die Erfindung betrifft eine flexible Schlauchleitung, insbesondere für Trinkwasseranwendungen, mit einer PVC enthaltenden, polymeren Tragschicht (1), einer die Tragschicht (1) umgebenden Armierungsschicht (2) und optional einer die Armierungsschicht (2) umgebenden Außenschicht (5) aus polymerem Material. Erfindungsgemäß enthält die Tragschicht (1) und/oder die Außenschicht (5) mindestens ein PVC-Copolymer in Form eines Vinylchlorid-Alkylacrylat-Propfcopolymers und/oder eines Vinylchlorid-Vinylacetat-Copolymers.

## Beschreibung

Die Erfindung betrifft eine flexible Schlauchleitung, insbesondere für Trinkwasseranwendungen,
- einer PVC enthaltenden, polymeren Tragschicht,
- einer die Tragschicht umgebenden Armierungsschicht und
- optional einer die Armierungsschicht umgebenden Außenschicht aus polymerem Material.

Schläuche für Trinkwasser werden z.B. aus mit Weichmachern versehenem Polyvinylchlorid (PVC) oder Gummimaterialien hergestellt, um die gewünschte Flexibilität sicherstellen zu können. PVC zeichnet sich durch einen günstigen Preis und eine gute Alterungsbeständigkeit aus. Der beim Einsatz von PVC für flexible Schlauchleitungen regelmäßig erforderliche Weichmacher ist jedoch ökologisch bedenklich. Zwar hat man in der Praxis phthalathaltige Weichmacher in jüngerer Zeit praktisch vollständig durch phthalatfreie Weichmacher ersetzt, wie z.B. in der gattungsgemäßen EP 2 032 359 B1 beschrieben, jedoch sind auch diese phthalatfreien Weichmacher aufgrund weiterhin steigender Hygieneanforderungen an den Transport von Trinkwasser zunehmend bedenklich.

Seit geraumer Zeit kommen daher auch spezielle Polyolefin-Materialien bzw. spezielle thermoplastische Elastomere (TPE) zum Einsatz, z.B. thermoplastische Elastomere auf Styrolbasis (TPE-S). Es können weitere Rezepturkomponenten vorgesehen sein, sowie ggf. Füllstoffe und Stabilisatoren, um die Anforderungen der von der Deutschen Trinkwasserverordnung als "allgemein anerkannte Regeln der Technik" abzuleitenden Hygienestandards "technische Regel Arbeitsblatt W 270" (DIN EN 16421 - Verfahren 2) des DVGW, sowie "Leitlinie zur hygienischen Beurteilung von anorganischen Materialien im Kontakt mit Trinkwasser (KTW-Leitlinie)" des Deutschen Umweltbundesamtes zu erfüllen.

Die DE 20 2010 006 308 U1 offenbart eine Schlauchleitung mit einer Schicht aus einem thermoplastischen Elastomer auf Styrolbasis (TPE-S). Dieser Schlauch ist für die Durchleitung von Trinkwasser geeignet und erfüllt die DVGW-Richtlinien gemäß Arbeitsblatt W 270 zur Trinkwasserverordnung von 2001. TPE-S sind thermoplastische Elastomer-Compounds, die in der Regel auf einer Polypropylen-Matrix (Homopolymer, BlockCopolymer, Random-Copolymer) basieren, in die der hydrierte Styrol-Dien-BlockCopolymer-Kautschuk (z.B. SEBS, SEPS), sowie ggf. paraffinisches Weißöl, Füllstoffe und Stabilisatoren eingebettet werden. Trinkwasserkonforme Materialien müssen allerdings ölfrei sein, um die erforderlichen Hygienestandards zu erfüllen. Zur Erringung einer ausreichenden Flexibilität muss ferner der Kautschukanteil sehr hoch dosiert sein, was wirtschaftliche Nachteile hat, aber auch verarbeitungstechnisch ungünstig ist (z.B. hohe Klebrigkeit).

Die EP 2 032 352 B1 offenbart einen flexiblen Schlauch zum Transport von Nahrungsmittel-Flüssigkeiten, der eine Innenschicht aus einem TPE aufweist. Nachteilig bei diesem vorbekannten Schlauch ist allerdings, dass die TPE-Schicht aus einem vergleichsweise weichen Material besteht, dessen chemische Beständigkeit gegenüber Reinigungs- und Desinfektionsmitteln in der Regel begrenzt ist. Ferner ist die Verschmutzungsneigung aufgrund der rauen Oberfläche weicher TPE-Materialien vergleichsweise hoch. Darüber hinaus ist die geringere mechanische Stabilität einer vergleichsweise weichen TPE-Schicht während der Fertigung mittels eines Extrusionsverfahrens von Nachteil, da diese hier zum Kollabieren neigt. Ferner ist auch das weichelastische Verhalten der inneren Schlauchschicht beim Anschluss der Schlauchleitung an Anschlussarmaturen hinsichtlich der dauerhaften Dichtigkeit nachteilig.

Vor diesem Hintergrund liegt der Erfindung die Aufgabe zugrunde, eine Schlauchleitung mit den eingangs beschriebenen Merkmalen anzugeben, welche sich durch eine hohe chemische Beständigkeit auszeichnet, kostengünstig herstellen lässt und dabei gleichzeitig ökologisch zumindest weitgehend unbedenklich ist.

Erfindungsgemäß wird diese Aufgabe dadurch gelöst, dass die Tragschicht und/oder die Außenschicht mindestens ein PVC-Copolymer in Form eines Vinylchlorid-Alkylacrylat-Propfcopolymers und/oder eines Vinylchlorid-Vinylacetat-Copolymers enthält. Zweckmäßigerweise beträgt der Gewichtsanteil des PVC-Copolymers in der Tragschicht und/oder der Außenschicht 50 - 100 %, vorzugsweise 60 - 80 %. Als Vinylchlorid-Alkylacrylat-Propfcopolymer kann insbesondere die Substanz mit der CAS-Nr. 25702-34-5 zum Einsatz kommen, z.B. mit einem Acrylatanteil von 40 - 60 Gew.-%. Alternativ oder ergänzend kann als Vinylchlorid-Vinylacetat-Copolymer die Substanz mit der CAS-Nr. 9003-22-9 verwendet werden, beispielsweise mit einem Vinylacetatanteil von 5 - 15 Gew.-%.

Um die nötige Flexibiltät der Schlauchleitung zu gewährleisten, hat es sich insbesondere als vorteilhaft herausgestellt, wenn die Tragschicht und/oder die Außenschicht zusätzlich eine polymere Weichkomponente in Form eines Ethylen-Vinylacetat-Copolymers (EVA) und/oder eines Ethylen-Vinylacetat-Kohlenmonoxid-Terpolymers (E/VA/CO) (z.B. mit einem VA-Anteil von 40 - 60 Gew.-%) und/oder eines Ethylen/n-Butylacrylate/ Kohlenmonoxid-Terpolymers (E/nBA/CO) und/oder eines chlorierten Polyethylens (z.B. mit einem Chlorgehalt von 30 - 50 Gew.-%, insbesondere Gew.-35 - 40 %) und/oder eines Nitril-Butadien-Kautschuks und/oder einen Polyester-Polyurethan-Modifiers (TPU-ARES) enthält. Der Gewichtsanteil der Weichkomponente in der Tragschicht und/oder der Außenschicht beträgt zweckmäßigerweise 10 - 50 %, insbesondere 20 - 40 %.

Erfindungsgemäß wurde erkannt, dass durch den Einsatz der vorgenannten PVC-Copolymere sowie der genannten Weichkomponenten eine ausreichende Flexibilität der entsprechenden Schicht gewährleistet ist, so dass einerseits weiterhin die genannten Vorteile von PVC genutzt werden können und es gleichzeitig andererseits des vorgenannten problematischen Einsatzes von Weichmachern nicht zwingend bedarf. Vorzugsweise ist daher die Tragschicht und/oder die Außenschicht frei von zusätzlichen Weichmachern. Die Tragschicht und/oder die Außenschicht weist zweckmäßigerweise eine Härte Shore A von 60 bis 90, insbesondere 70 bis 80, auf. Die Härte Shore A wird hierbei z.B. nach DIN EN ISO 868 ermittelt (z.B. an 2 mm dicken Spritzgussplatten, 3-fach geschichtet, Ablesezeit 1 bis 3 sec).

Die Tragschicht und/oder die Außenschicht kann ferner einen auf Calcium- und/oder Zinkseifen basierenden Stabilisator enthalten. Ggf. kann dieser Stabilisator zusätzlich phenolische und/oder phosphitische Antioxidantien enthalten. Der Gewichtsanteil des Stabilisators in der entsprechenden Schicht liegt zweckmäßigerweise bei 0,2 - 5 %, z.B. 1 - 3 %. Im Rahmen der Erfindung liegt es generell ferner, dass die Tragschicht die innerste Schicht der Schlauchleitung ist, welche entsprechend mit dem zu transportierenden Fluid beaufschlagt wird. Alternativ kann jedoch auch innenseitig an die Tragschicht mindestens eine Innenschicht anschließen, die bspw. frei von PVC ist. Ferner kann die Außenschicht die äußerste Schicht der Schlauchleitung darstellen. Alternativ kann die Außenschicht jedoch auch von einer oder mehreren Schichten umgeben sein.

Zweckmäßigerweise enthält die Tragschicht und/oder die Außenschicht zusätzlich Füllstoffe, insbesondere Calciumcarbonat (z.B. Kreide) und/oder Talkum und/oder Magnesiumcarbonat und/oder Magnesiumhydroxid. Der Gewichtsanteil der Füllstoffe in der jeweiligen Schicht beträgt vorzugsweise 1 - 60 %, insbesondere 10 - 30 %. Zwecks Einfärbung kann ferner die Tragschicht und/oder die Außenschicht Farbpigmente, insbesondere Titandioxid, anorganische Pigmente, organische Pigmente oder organische Farbstoffe enthalten. Der Gewichtsanteil der Farbstoffe in der jeweiligen Schicht beträgt vorzugsweise 1 - 5 %, insbesondere 1,5 - 3 %.

Die Armierungsschicht kann, vorzugsweise diagonal gewickelte und/oder geflochtene, Filamente aufweisen. Die polymeren Schichten werden zweckmäßigerweise mittels eines Polymerverarbeitungsverfahren, insbesondere mittels Extrusion hergestellt.

Die erfindungsgemäße Schlauchleitung kann für den Transport unterschiedlichster Fluide, insbesondere Flüssigkeiten, zum Einsatz kommen. Ein besonders bevorzugter Anwendungsbereich ist der Transport von Trinkwasser, z.B. im Sanitärbereich oder aber auch zur Bewässerung von Gärten.

Im Folgenden wird die Erfindung anhand einer lediglich ein Ausführungsbeispiel darstellenden Zeichnung erläutert. Es zeigen schematisch:
- Fig. 1: eine Seitenansicht eines Ausschnittes eines erfindungsgemäßen Schlauches und
- Fig. 2: einen Querschnitt durch den in Fig. 1 dargestellten Schlauch.

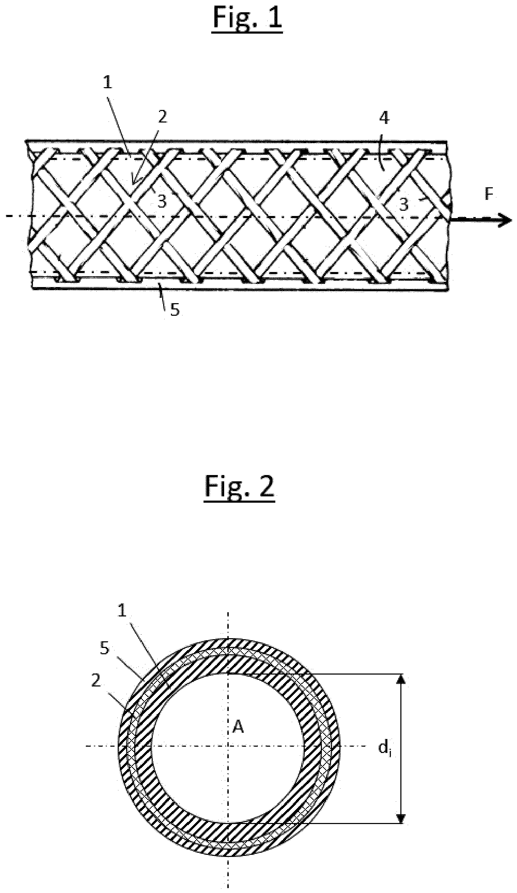

In Fig. 1 ist eine flexible Schlauchleitung, z.B. in Form eines Gartenschlauches dargestellt, welcher zum Transport von Trinkwasser F zwecks Gartenbewässerung eingesetzt wird. Die Schlauchleitung weist als innerste Schicht eine PVC enthaltende, polymere Tragschicht, einer die Tragschicht 1 umgebende Armierungsschicht 2 und eine die Armierungsschicht 2 umgebende Außenschicht 5 aus polymerem Material auf. Die Armierungsschicht 2 ist aus diagonal geflochtenen Filamenten in Form von Fäden 3 aufgebaut. Im Ausführungsbeispiel ist die Armierungsschicht 2 offen gestaltet, d.h. zwischen den einzelnen sich überkreuzenden Fäden 3 verbleiben Freiräume 4, so dass die Schlauchleitung bei innerer Druckbelastung "atmen" kann. Die Tragschicht 1 und die Außenschicht 5 enthalten erfindungsgemäß ein PVC-Copolymer in Form eines Vinylchlorid-Alkylacrylat-Propfcopolymers oder eines Vinylchlorid-Vinylacetat-Copolymers. Im Ausführungsbeispiel kommt als Vinylchlorid-Alkylacrylat-Propfcopolymer die Substanz mit der CAS - Nr. 25702-34-5 zum Einsatz, die einen Acrylatanteil von ca. 50 Gew.-% aufweist. Alternativ wird als Vinylchlorid-Vinylacetat-Copolymer die Substanz mit der CAS-Nr. 9003-22-9 verwendet mit einem Vinylacetatanteil von ca. 11 Gew.-%. Der Gewichtsanteil des PVC-Copolymers in der Tragschicht sowie der Außenschicht beträgt im Ausführungsbeispiel 60 - 80 %. Ferner enthalten im Ausführungsbeispiel die Tragschicht 1 und die Außenschicht 5 zusätzlich eine polymere Weichkomponente in Form eines Ethylen-Vinylacetat-Copolymers. Der Gewichtsanteil dieser Weichkomponente in der Tragschicht 1 bzw. Außenschicht 5 beträgt 15 - 30 %. Die Tragschicht 1 und auch die Außenschicht 5 sind frei von zusätzlichen Weichmachern.

Die Tragschicht 1 und auch die Außenschicht 5 weisen jeweils eine Härte Shore A von 70 bis 80 auf. Die Tragschicht 1 und die Außenschicht 5 enthalten einen auf Calcium- und/oder Zinkseifen basierenden Stabilisator, der zusätzlich phenolische und/oder phosphitische Antioxidantien enthalten kann. Ferner enthalten Tragschicht 1 und Außenschicht 5 zusätzlich Füllstoffe, insbesondere Calciumcarbonat und/oder Talkum und/oder Magnesiumcarbonat und/oder Magnesiumhydroxid. Zur Einfärbung enthalten die Tragschicht und die Außenschicht 5 zusätzlich Farbpigmente, insbesondere Titandioxid, anorganische Pigmente, organische Pigmente oder organische Farbstoffe. Beide polymeren Schichten 1, 5 sind mittels Extrusion hergestellt. Aus Fig. 2 ist ersichtlich, dass die Tragschicht 1 im Ausführungsbeispiel einen Innendurchmesser dᵢ von 10 - 15 mm (z.B. ½ Zoll) aufweist.

## Patentansprüche

1. Flexible Schlauchleitung, insbesondere für Trinkwasseranwendungen, mit
- einer PVC enthaltenden, polymeren Tragschicht (1),
- einer die Tragschicht (1) umgebenden Armierungsschicht (2) und
- optional einer die Armierungsschicht (2) umgebenden Außenschicht (5) aus polymerem Material,
**dadurch gekennzeichnet, dass** die Tragschicht (1) und/oder die Außenschicht (5) mindestens ein PVC-Copolymer in Form eines Vinylchlorid-Alkylacrylat-Propfcopolymers und/oder eines Vinylchlorid-Vinylacetat-Copolymers enthält.

2. Schlauchleitung nach Anspruch 1, **dadurch gekennzeichnet, dass** der Gewichtsanteil des PVC-Copolymers in der Tragschicht (1) und/oder der Außenschicht (5) 50 - 100 %, vorzugsweise 60 - 80 % beträgt.

3. Schlauchleitung nach Anspruch 1 oder 2, **dadurch gekennzeichnet, dass** die Tragschicht (1) und/oder die Außenschicht (5) zusätzlich eine polymere Weichkomponente in Form eines Ethylen-Vinylacetat-Copolymers und/oder eines Ethylen-Vinylacetat-Kohlenmonoxid-Terpolymers und/oder eines Ethylen/n-Butylacrylate/ Kohlenmonoxid-Terpolymers und/oder eines chlorierten Polyethylens und/oder eines Nitril-Butadien-Kautschuks und/oder einen Polyester-Polyurethan-Modifiers enthält.

4. Schlauchleitung nach Anspruch 3, **dadurch gekennzeichnet, dass** der Gewichtsanteil der Weichkomponente in der Tragschicht (1) und/oder der Außenschicht (5) 10 - 50 %, insbesondere 20 - 40 % beträgt.

5. Schlauchleitung nach einem der Ansprüche 1 bis 4, **dadurch gekennzeichnet, dass** die Tragschicht (1) und/oder die Außenschicht (5) frei von zusätzlichen Weichmachern ist.

6. Schlauchleitung nach einem der Ansprüche 1 bis 5, **dadurch gekennzeichnet, dass** die Tragschicht (1) und/oder die Außenschicht (5) eine Härte Shore A von 60 bis 90, insbesondere 70 bis 80, aufweist.

7. Schlauchleitung nach einem der Ansprüche 1 bis 6, **dadurch gekennzeichnet, dass** die Tragschicht (1) und/oder die Außenschicht (5) einen auf Calcium- und/oder Zinkseifen basierenden Stabilisator enthält.

8. Schlauchleitung nach Anspruch 7, **dadurch gekennzeichnet, dass** der Stabilisator zusätzlich phenolische und/oder phosphitische Antioxidantien enthält.

9. Schlauchleitung nach einem der Ansprüche 1 bis 8, **dadurch gekennzeichnet, dass** die Tragschicht (1) die innerste Schicht der Schlauchleitung ist.

10. Schlauchleitung nach einem der Ansprüche 1 bis 9, **dadurch gekennzeichnet, dass** die Tragschicht (1) und/oder die Außenschicht (5) zusätzlich Füllstoffe, insbesondere Calciumcarbonat und/oder Talkum und/oder Magnesiumcarbonat und/oder Magnesiumhydroxid enthält.

11. Schlauchleitung nach einem der Ansprüche 1 bis 10, **dadurch gekennzeichnet, dass** die Tragschicht und/oder die Außenschicht (5) Farbpigmente, insbesondere Titandioxid, anorganische Pigmente, organische Pigmente oder organische Farbstoffe enthält.

12. Schlauchleitung nach einem der Ansprüche 1 bis 11, dass die Armierungsschicht (6), vorzugsweise diagonal gewickelte und/oder geflochtene, Filamente (3) aufweist.

13. Schlauchleitung nach einem der Ansprüche 1 bis 12, **dadurch gekennzeichnet, dass** die polymeren Schichten (1, 5) mittels eines Polymerverarbeitungsverfahren, insbesondere mittels Extrusion hergestellt sind.
